# EUROPEAN PATENT APPLICATION

(11) **EP 4 783 306 A1**
(43) Date of publication of application: **29.07.2026**
(21) Application number: 25214791.3
(22) Date of filing: 11.11.2025
(51) Int. Cl.: H01M 50/103, H01M 50/15, H01M 50/176, H01M 50/188, H01M 50/553

(54) **CAP ASSEMBLY AND SECONDARY BATTERY INCLUDING SAME**

(30) Priority: 24.01.2025 KR 20250011343
(71) Applicant: SAMSUNG SDI CO., LTD., Yongin-si, Gyeonggi-do 17084 (KR)
(72) Inventor: Kim, Backgun, 17084 Yongin-Si (KR); Yoo, Seungyeol, 17084 Yongin-si (KR)
(74) Representative: Marks & Clerk LLP

(57) **Abstract**

A cap assembly (100) includes: a cap plate (110) including at least one first engaging portion (113); and at least one terminal assembly (120) including a second engaging portion (122) fitted and engaged with the first engaging portion (113).

## Description

### BACKGROUND

### 1. Field

Aspects of embodiments of present disclosure relate to a cap assembly, and a secondary battery including the cap assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be classified into a cylindrical secondary battery, a prismatic secondary battery, or a pouch-kind of secondary battery according to a shape of a case. The prismatic secondary battery has a structure in which an electrode assembly is accommodated in a prismatic metal case, and then the case and a cap assembly are assembled.

The above information disclosed in this Background section is for enhancement of understanding of the background of the present disclosure, and therefore, it may contain information that does not constitute related (or prior) art.

### SUMMARY

A prismatic secondary battery may be classified into a bending-kind of structure and a direct-connection structure. In the bending-kind of structure, a current-collecting tab may be bent between a sub-plate and a current collector, and may be used for a connection. In the direct-connection structure, the sub-plate and the current collector may be directly connected to each other. A cap assembly used in the direct-connection structure may have a structure in which a cap plate, a terminal part, a gasket, and a current collector part are combined with one another, but a combining process may be complicated. In addition, a current short path may be formed during a process of welding the terminal part and the current collector part to each other.

Embodiments of the present disclosure may be directed to a cap assembly, and a secondary battery including the cap assembly.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a cap assembly includes: a cap plate including at least one first engaging portion; and at least one terminal assembly including a second engaging portion fitted and engaged with the first engaging portion.

In an embodiment, the at least one terminal assembly may include: a groove plate having a terminal hole, and including the second engaging portion; and a direct-connection terminal having one side connected to an electrode assembly, and another side protruding to an outside through the terminal hole.

In an embodiment, the second engaging portion may be located on at least one from among multiple side surfaces of the groove plate that contacts the cap plate, and may correspond to the first engaging portion.

In an embodiment, the second engaging portion may include: a first extension portion extending laterally along a perimeter of an upper surface of the groove plate; and a second extension portion facing the first extension portion, and extending along a perimeter of a lower surface of the groove plate. The first extension portion and the second extension portion may have an interval therebetween in a thickness direction of the groove plate, the interval corresponding to a thickness of the first engaging portion.

In an embodiment, the second extension portion may include a bent portion bent toward the first extension portion at opposite ends in a lengthwise direction of the groove plate, and the first engaging portion may include a groove portion corresponding to the bent portion.

In an embodiment, the direct-connection terminal may include: an integral terminal protruding to the outside through the terminal hole; and a current-collecting plate extending from opposites ends of one side of the integral terminal facing the electrode assembly, and connected to an electrode tab of the electrode assembly.

In an embodiment, the cap assembly may further include an insulating member interposed between the cap plate and the current-collecting plate.

In an embodiment, the terminal assembly may further include a gasket inserted into the terminal hole, and insulating the direct-connection terminal from the groove plate.

In an embodiment, the cap plate may include: a base portion having a recessed portion to receive the terminal assembly therein; and the first engaging portion extending along a perimeter of a side surface of the recessed portion.

In an embodiment, the recessed portion may be recessed in the base portion in a first direction to facilitate the second engaging portion to be fitted and engaged with the first engaging portion.

In an embodiment, the first engaging portion may have a step with respect to each of an upper surface and a lower surface of the base portion, and the thickness of the first engaging portion may be thinner than a thickness of the base portion.

In an embodiment, the first engaging portion and the second engaging portion may be fixed to each other by welding.

According to one or more embodiments of the present disclosure, a secondary battery includes: an electrode assembly including a first electrode, a second electrode, and a separator; a case having at least one opening, and accommodating the electrode assembly; and a cap assembly sealing the opening of the case. The cap assembly includes: a cap plate including at least one first engaging portion; and at least one terminal assembly including a second engaging portion fitted and engaged with the first engaging portion.

In an embodiment, the terminal assembly may include: a groove plate having a terminal hole, and including the second engaging portion; and a direct-connection terminal having one side connected to the electrode assembly, and another side protruding to an outside through the terminal hole.

In an embodiment, the second engaging portion may be located on at least one from among multiple side surfaces of the groove plate that contacts the cap plate, and may correspond to the first engaging portion.

In an embodiment, the second engaging portion may include: a first extension portion extending laterally along a perimeter of an upper surface of the groove plate; and a second extension portion facing the first extension portion, and extending along a perimeter of a lower surface of the groove plate. The first extension portion and the second extension portion may have an interval therebetween in a thickness direction of the groove plate, the interval corresponding to a thickness of the first engaging portion.

In an embodiment, the direct-connection terminal may include: an integral terminal protruding to the outside through the terminal hole; and a current-collecting plate extending from opposite ends of one side of the integral terminal facing the electrode assembly, and connected to an electrode tab of the electrode assembly.

In an embodiment, the cap plate may include: a base portion having a recessed portion to receive the terminal assembly therein; and the first engaging portion extending along a perimeter of a side surface of the recessed portion.

In an embodiment, the recessed portion may be recessed in the base portion in a first direction to facilitate the second engaging portion to be fitted and engaged with the first engaging portion.

In an embodiment, the first engaging portion may have a step with respect to each of an upper surface and a lower surface of the base portion, and the thickness of the first engaging portion may be thinner than a thickness of the base portion.

According to some embodiments of the present disclosure, one side of a terminal assembly may be connected to an electrode assembly, and another side (e.g., an opposite side) of the terminal assembly may protrude to the outside as a terminal that is connectable (e.g., that may be connected) to an external device, thereby providing a current path having a reduced resistance between the electrode assembly and the external device.

According to some embodiments of the present disclosure, a cap assembly for more easily coupling of the cap plate and the terminal assembly to each other may be provided, thereby reducing process costs and a time for manufacturing the cap assembly.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a top view illustrating a cap assembly according to an embodiment of the present disclosure.
FIG. 2 is a cross-sectional view illustrating a cap assembly according to an embodiment of the present disclosure.
FIG. 3 is a top view illustrating a terminal assembly according to an embodiment of the present disclosure.
FIG. 4 is a cross-sectional view illustrating a terminal assembly according to an embodiment of the present disclosure.
FIG. 5 is a top view illustrating a cap plate according to an embodiment of the present disclosure.
FIG. 6 is a cross-sectional view illustrating a cap plate according to an embodiment of the present disclosure.
FIGS. 7 and 8 are diagrams illustrating a method of coupling a cap plate and a terminal assembly to each other according to one or more embodiments of the present disclosure.
FIG. 9 is a cross-sectional view illustrating a terminal assembly according to an embodiment of the present disclosure.
FIG. 10 is a cross-sectional view illustrating a cap plate according to an embodiment of the present disclosure.
FIG. 11 is a cross-sectional view illustrating a cap assembly according to an embodiment of the present disclosure.
FIG. 12 is a cross-sectional view illustrating a cap assembly according to an embodiment of the present disclosure.
FIG. 13 is a top view illustrating a cap assembly according to an embodiment of the present disclosure.
FIG. 14 is a perspective view illustrating a secondary battery according to an embodiment of the present disclosure.
FIG. 15 is a cross-sectional view taken along the line A-A of FIG. 14.
FIG. 16 is a perspective view illustrating a secondary battery according to an embodiment of the present disclosure.
FIG. 17 is a cross-sectional view taken along the line B-B of FIG. 16.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

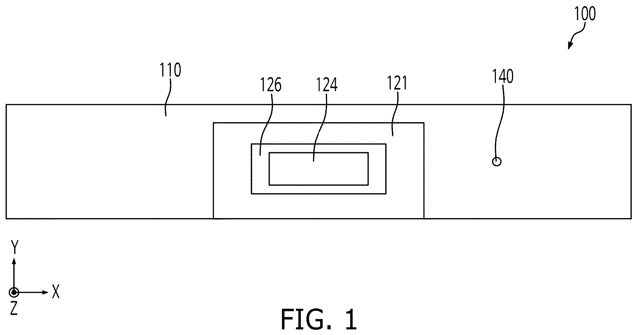

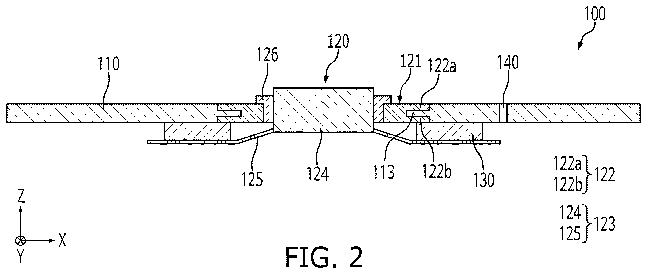

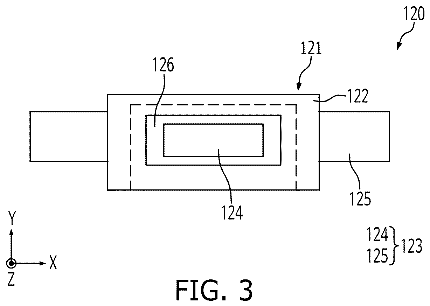

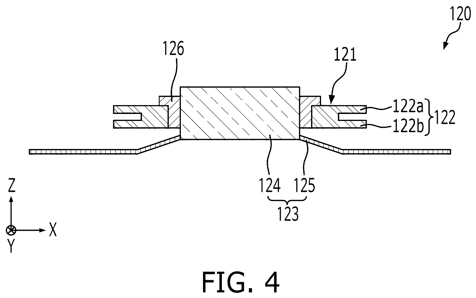

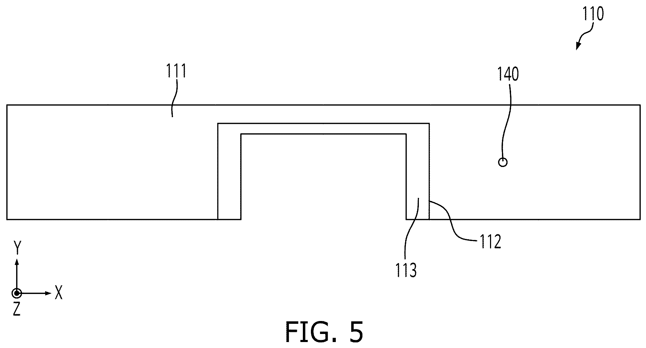

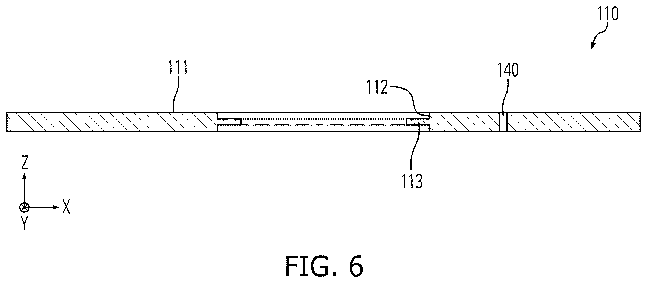

FIG. 1 is a top view illustrating a cap assembly according to an embodiment of the present disclosure. FIG. 2 is a cross-sectional view illustrating a cap assembly according to an embodiment of the present disclosure. FIG. 3 is a top view illustrating a terminal assembly according to an embodiment of the present disclosure. FIG. 4 is a cross-sectional view illustrating a terminal assembly according to an embodiment of the present disclosure. FIG. 5 is a top view illustrating a cap plate according to an embodiment of the present disclosure. FIG. 6 is a cross-sectional view illustrating a cap plate according to an embodiment of the present disclosure.

Referring to FIGS. 1-6, a cap assembly 100 according to some embodiments of the present disclosure may include a cap plate 110, and at least one terminal assembly 120. The cap plate 110 may include at least one first engaging portion 113. The terminal assembly 120 may include a second engaging portion 122 that is fitted and engaged with the first engaging portion 113.

In an embodiment, the cap plate 110 may include a base portion 111 having a recessed portion 112 formed therein so that the terminal assembly 120 may be disposed in the recessed portion 112, and a first engaging portion 113 extending along a perimeter of a side surface of the recessed portion 112.

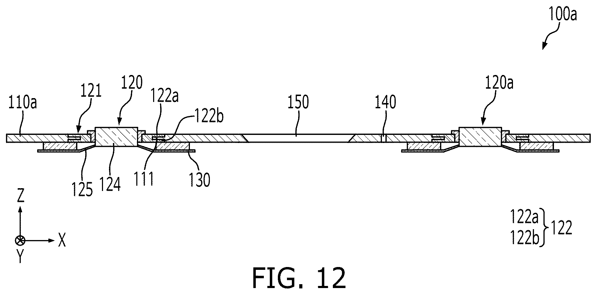

In an embodiment, the base portion 111 may include (e.g., may be) a conductive metal having a thin plate-shaped body, for example. The recessed portion 112 may be formed by recessing the base portion 111 in a first direction (e.g., in the Y-axis direction) so that the second engaging portion 122 of the terminal assembly 120 may be fitted and engaged with the first engaging portion 113. In other words, the recessed portion 112 may be recessed in the base portion 111 in a first direction to facilitate the second engaging portion 122 to be fitted and engaged with the first engaging portion113. As illustrated in FIG. 5, one recessed portion 112 may be formed in the base portion 111, such that one terminal assembly 120 may be coupled to the cap plate 110. However, the present disclosure is not limited thereto. For example, two recessed portions (e.g., see FIG. 12) may be formed in the base portion so that two terminal assemblies (e.g., the two terminal assemblies 120 and 120a shown in FIG. 12) may be coupled to the cap plate (e.g., the cap plate 110a shown in FIG. 12).

In an embodiment, the first engaging portion 113 may have a step with respect to each of an upper surface and a lower surface of the base portion 111, and may be formed to be thinner than the thickness of the base portion 111. The first engaging portion 113 may be formed to be thinner than the thickness of the base portion 111 along a perimeter at a side where the base portion 111 is recessed. For example, the thickness of the first engaging portion 113 may be formed to be thinner than that of the base portion 111, and may correspond to the gap of a groove of the second engaging portion 122 so that the first engaging portion 113 and the second engaging portion 122 may be fitted and engaged with each other.

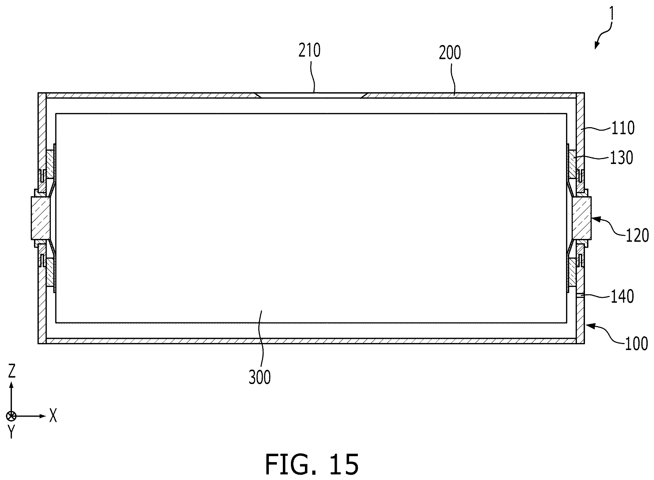

In an embodiment, the terminal assembly 120 may include a groove plate 121 having a terminal hole and including the second engaging portion 122, and a direct-connection terminal 123 with one side connected to an electrode assembly 300 (e.g., see FIG. 15) and another side protruding to the outside through the terminal hole.

In an embodiment, the groove plate 121 may include (e.g., may be) a conductive metal, for example, having a thin plate-shaped body as the base portion 111. A terminal hole may be formed in a central region of the groove plate 121, and the second engaging portion 122 may be formed along a perimeter of a side surface of the groove plate 121 contacting the cap plate 110.

In an embodiment, the second engaging portion 122 may be formed on at least one of the multiple side surfaces of the groove plate 121 that contacts the cap plate 110 and corresponds to the first engaging portion 113. For example, the second engaging portion 122 may be formed to correspond to a length, a thickness, a shape, and/or the like of the first engaging portion 113 so that the second engaging portion 122 may be fitted and engaged to the first engaging portion 113. For example, the second engaging portion 122 may be formed on one side surface in the Y-axis direction and on both side surfaces (e.g., opposite side surfaces) in the X-axis direction of the groove plate 121 that contact the cap plate 110, or the second engaging portion 122 may be formed only on both side surfaces (e.g., opposite side surfaces) in the X-axis direction, corresponding to the first engaging portion 113.

In an embodiment, the second engaging portion 122 may include a first extension portion 122a and a second extension portion 122b. The first extension portion 122a may extend laterally along a perimeter of the groove plate 121. The second extension portion 122b may face the first extension portion 122a, and may extend along a perimeter of a lower surface of the groove plate 121. The first extension portion 122a and the second extension portion 122b may form a groove along the perimeter of the groove plate 121. The first extension portion 122a and the second extension portion 122b may form a groove having an interval (e.g., a predetermined interval) in a thickness direction of the groove plate 121, corresponding to the thickness of the first engaging portion 113. In other words, the first extension portion 122a and the second extension portion 122b may have an interval therebetween in a thickness direction of the groove plate 121, the interval corresponding to a thickness of the first engaging portion 113.

In an embodiment, the direct-connection terminal 123 may include an integrally formed terminal 124 and a current-collecting plate 125. The integrally formed terminal 124 may protrude to the outside through the terminal hole of the groove plate 121. The integrally formed terminal 124 may function as a terminal connected to an external device (e.g., a protection circuit module) by protruding to the outside. The current-collecting plate 125 may extend from both ends (e.g., opposite ends) of one side of the integrally formed terminal 124 facing the electrode assembly 300 (e.g., see FIG. 15), and may be connected to an electrode tab of the electrode assembly 300. For example, the current-collecting plate 125 may be welded to the electrode tab of the electrode assembly 300, and may function as a current path. The integrally formed terminal 124 and the current-collecting plate 125 may be formed as a single unit, thereby functioning as a current path having a reduced resistance. For example, when the current-collecting plate 125 is connected to a first electrode tab of the electrode assembly 300, the direct-connection terminal 123 may have the same polarity as that of the first electrode. As another example, when the current-collecting plate 125 is connected to a second electrode tab of the electrode assembly 300, the direct-connection terminal 123 may have the same polarity as that of the second electrode.

In an embodiment, the terminal assembly 120 may further include a gasket 126 inserted into the terminal hole, and insulating the direct-connection terminal 123 from the groove plate 121. The insulating gasket 126 may be disposed between the terminal hole and the direct-connection terminal 123 so that the direct-connection terminal 123 and the groove plate 121 are electrically insulated from each other.

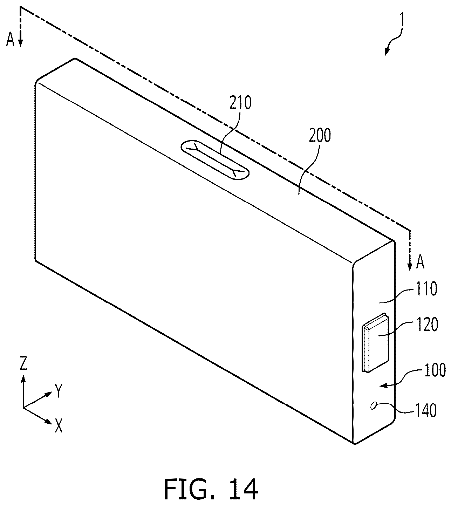

In an embodiment, if (e.g., when) the groove plate 121, the cap plate 110, and the case 200 (e.g., see FIG. 14) coupled with the direct-connection terminal 123 function as the same polarity as each other, the gasket 126 may be omitted. For example, if (e.g., when) the direct-connection terminal 123 is connected to a first electrode tab of the electrode assembly 300, has the same polarity as that of the first electrode, and the case 200 also has the same polarity as that of the first electrode, a separate gasket may not be provided.

In an embodiment, the cap assembly 100 may further include an insulating member 130 interposed between the cap plate 110 and the current-collecting plate 125 so as to insulate them. The insulating member 130 may prevent or substantially prevent a movement of the electrode assembly 300 inside the case 200 (e.g., see FIG. 15), and may electrically insulate the current-collecting plate 125, which is connected to the electrode assembly 300, from the cap plate 110.

The cap assembly 100 may further include an electrolyte injection hole 140. The electrolyte injection hole 140 may penetrate the cap plate 110, and may be provided to inject an electrolyte into the inside of the case 200 after the cap plate 110 is coupled to the opening of the case 200. After the electrolyte is injected, the electrolyte injection hole 140 may be sealed with a sealing member.

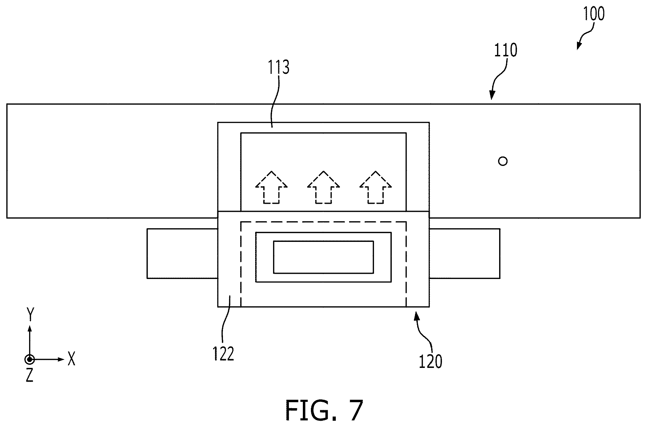

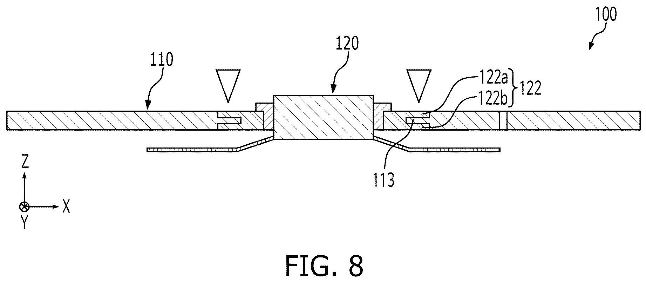

FIGS. 7 and 8 are diagrams illustrating a method of coupling the cap plate and the terminal assembly to each other according to one or more embodiments of the present disclosure.

Referring to FIGS. 7 and 8, the terminal assembly 120 may be inserted in a first direction (e.g., the Y-axis direction) into the cap plate 110 so that the first engaging portion 113 of the cap plate 110 and the second engaging portion 122 of the terminal assembly 120 are fitted and engaged with each other.

In an embodiment, a groove may be formed in the second engaging portion 122 to correspond to a protruding length, width, shape, and/or the like of the first engaging portion 113, such that no gap may occur between the cap plate 110 and the terminal assembly 120. The first engaging portion 113 and the second engaging portion 122, after a fit engagement, may be welded and fixed together.

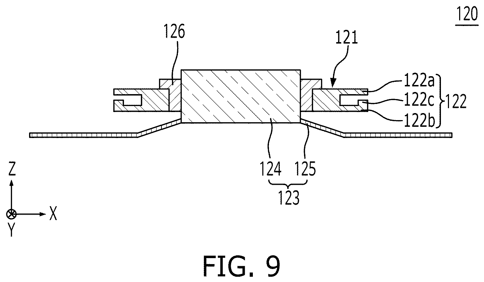

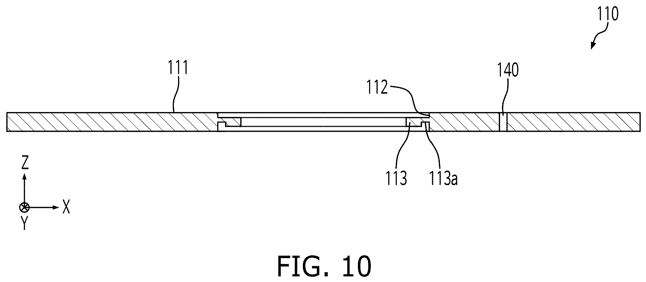

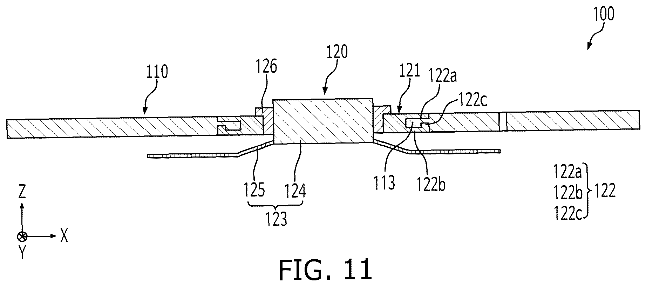

FIG. 9 is a cross-sectional view illustrating a terminal assembly according to an embodiment of the present disclosure. FIG. 10 is a cross-sectional view illustrating a cap plate according to an embodiment of the present disclosure. FIG. 11 is a cross-sectional view illustrating a cap assembly according to an embodiment of the present disclosure.

Referring to FIGS. 9-11, in an embodiment of the present disclosure, the second extension portion 122b of the groove plate 121 may further include a bent portion 122c, which may be bent toward the first extension portion 122a at both ends (e.g., opposite ends) of the groove plate 121 in a lengthwise direction (e.g., in the X-axis direction).

In an embodiment, the first engaging portion 113 of the cap plate 110 may further include a groove portion 113a formed to correspond to the bent portion 122c so that the second engaging portion 122 may be inserted therein. The bent portion 122c may be fitted and engaged with the groove portion 113a, increasing a coupling force between the first engaging portion 113 and the second engaging portion 122.

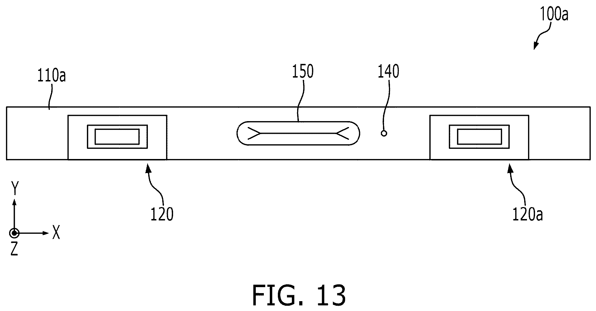

FIG. 12 is a cross-sectional view illustrating a cap assembly according to an embodiment of the present disclosure. FIG. 13 is a top view illustrating a cap assembly according to an embodiment of the present disclosure.

Referring to FIGS. 12 and 13, a cap assembly 100a according to another embodiment of the present disclosure may include one cap plate 110a and two terminal assemblies 120, 120a.

In an embodiment, the cap plate 110a may include two first engaging portions 113 so that the cap plate 110a may be coupled with the two terminal assemblies 120, 120a. The second engaging portion 122 of one terminal assembly 120 and the second engaging portion 122 of the other terminal assembly 120a may each be fitted and engaged with a corresponding first engaging portion 113.

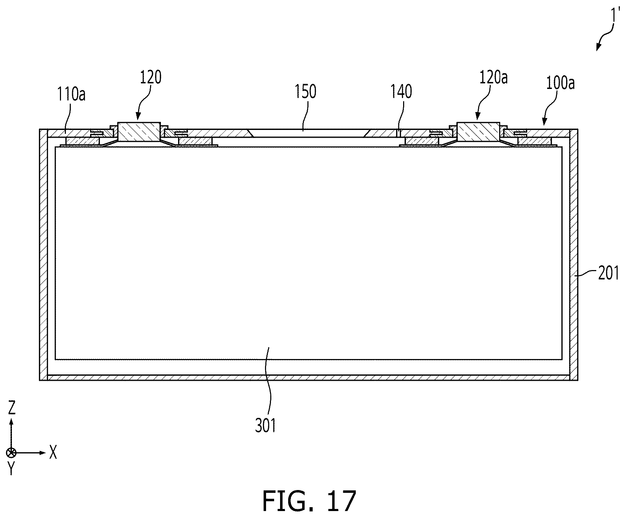

In an embodiment, the one terminal assembly 120 and the other terminal assembly 120a may have the same or substantially the same configuration as each other, but may be respectively connected to a first electrode tab and a second electrode tab of an electrode assembly 301 (e.g., see FIG. 17). For example, one terminal assembly 120 may be connected to the first electrode tab and have the same polarity as that of the first electrode, and the other terminal assembly 120a may be connected to the second electrode tab and have the same polarity as that of the second electrode. However, the present disclosure is not limited thereto, and the reverse may also be possible.

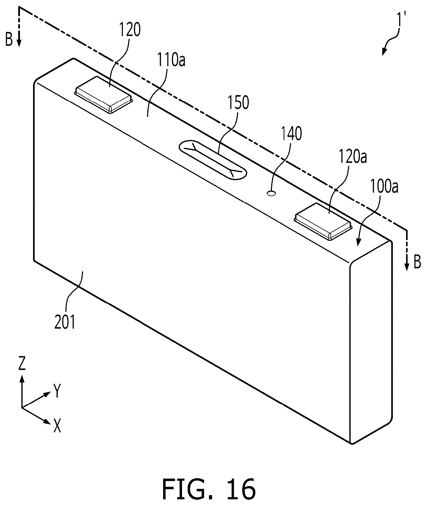

The cap assembly 100a may further include an electrolyte injection hole 140. The electrolyte injection hole 140 may penetrate the cap plate 110a, and may be provided to inject an electrolyte into the inside of the case (e.g., the case 201 shown in FIG. 16) after the cap plate 110a is coupled to the opening of the case (e.g., the case 201 shown in FIG. 16). After the electrolyte is injected, the electrolyte injection hole 140 may be sealed with a sealing member.

The cap assembly 100a may further include a vent portion 150. The vent portion 150 may release gas from inside the battery cell to the outside, if (e.g., when) the internal pressure of the battery cell exceeds a critical range due to an occurrence of a thermal event or the like. By discharging materials, such as gas or a flame, from inside the battery cell through the vent portion 150, the internal pressure of the battery cell may be reduced.

The vent portion 150 may include a vent hole and a vent plate. The vent hole may be an oblong opening formed at a central portion of the cap plate 110a. However, the present disclosure is not limited thereto, and the vent hole may be an opening having any suitable shape. The vent hole may be sealed by the vent plate. If (e.g., when) the internal pressure of the battery cell exceeds a critical range, the vent plate may rupture or separate to the outside, and gas may be discharged through the opened vent hole. As a result, the internal pressure of the battery cell may be reduced.

FIG. 14 is a perspective view illustrating a secondary battery according to an embodiment of the present disclosure. FIG. 15 is a cross-sectional view taken along the line A-A of FIG. 14.

Referring to FIGS. 14 and 15, a secondary battery 1 according to an embodiment of the present disclosure may include an electrode assembly 300, a case 200 accommodating the electrode assembly 300, and a cap assembly 100 sealing an opening of the case 200.

The electrode assembly 300 may be accommodated in the case 200. The electrode assembly 300 may be formed by winding or stacking a laminate of a first electrode, a separator, and a second electrode, each shaped as a thin plate or film. When the electrode assembly 300 is a wound laminate, a winding axis may be parallel to or substantially parallel to a lengthwise direction of the case 200. As another example, the electrode assembly 300 may be a stacked kind rather than a wound kind, but the shape of the electrode assembly 300 is not limited thereto in the present disclosure. The first electrode may function as a positive electrode, and the second electrode may function as a negative electrode, or vice versa.

The first electrode may be formed by applying a first electrode active material, such as a transition metal oxide, onto a first electrode current collector formed of a metal foil, such as aluminum or an aluminum alloy, and may include a first electrode tab (e.g., a first uncoated portion) that is an area where the first electrode active material is not applied. The first electrode tab may serve as a path for a current flow between the first electrode and the terminal assembly 120. In some embodiments, when manufacturing or forming the first electrode, the first electrode tab may be pre-cut to protrude from another side, and it may further protrude than the separator without an additional cutting.

The second electrode may be formed by applying a second electrode active material, such as graphite or carbon, onto a second electrode current collector formed of a metal foil, such as copper, a copper alloy, nickel, or a nickel alloy, and may include a second electrode tab (e.g., a second uncoated portion) that is an area where the second electrode active material is not applied. The second electrode tab may serve as a path for a current flow between the second electrode and the terminal assembly 120. In some embodiments, when manufacturing or forming the second electrode, the second electrode tab may be pre-cut to protrude from one side, and it may protrude further than the separator without an additional cutting.

In some embodiments, the first electrode tab may be located on one side (e.g., the right side) of the electrode assembly 300, and the second electrode tab may be located on the opposite side (e.g., the left side) of the electrode assembly 300. As used herein, "right" and "left" are used for convenience of illustration based on the secondary battery 1 illustrated in FIG. 15, but the positions may change if (e.g., when) the secondary battery 1 is rotated vertically or laterally.

The case 200 may include first and second openings on both sides (e.g., opposites sides), respectively, and may be formed to have an accommodating space in which the electrode assembly 300 may be accommodated. The case 200 may be formed of a conductive metal, such as aluminum, an aluminum alloy, or steel plated with nickel. In another example, the case 200 may be formed of stainless steel (SUS).

After the electrode assembly 300 is housed in the case 200, the cap assembly 100 may be coupled to the opening of the case 200 to seal the case 200. For example, one cap assembly 100 may be coupled to the first opening of the case 200, and another cap assembly 100 may be coupled to the second opening of the case 200. The first electrode and the second electrode of the electrode assembly 300 may each be electrically connected to a corresponding terminal assembly 120 provided in a corresponding cap assembly 100.

Because the cap assembly 100 may be the same or substantially the same as the cap assembly 100 described above with reference to FIGS. 1-11, redundant description thereof will not be repeated.

FIG. 16 is a perspective view illustrating a secondary battery according to an embodiment of the present disclosure. FIG. 17 is a cross-sectional view taken along the line B-B of FIG. 16. Hereinafter, with respect to the secondary battery 1' illustrated in FIGS. 16 and 17, redundant description of the same or substantially the same components as those of the secondary battery 1 described above with reference to FIGS. 14 and 15 may not be repeated, and the differences may be mainly described.

Referring to FIGS. 16 and 17, a secondary battery 1' according to another embodiment of the present disclosure may include an electrode assembly 301, a case 201 accommodating the electrode assembly 301, and a cap assembly 100a sealing an opening of the case 201.

The electrode assembly 301 may be accommodated in the case 201. The electrode assembly 301 may include a first electrode, a separator, and a second electrode. The first electrode may include a first electrode tab, and the second electrode may include a second electrode tab. The first electrode tab and the second electrode tab may each be positioned on the upper side of the electrode assembly in the same direction as each other. As used herein, the "upper side" is based on the secondary battery 1' illustrated in FIG. 17 for convenience of illustration, but the position may change if (e.g., when) the secondary battery 1' is rotated laterally or vertically.

The case 201 may include one opening on one side thereof, and may be formed to have an accommodating space for accommodating the electrode assembly 301.

After the electrode assembly 301 is accommodated in the case 201, the cap assembly 100a may be coupled to the opening of the case 201 to seal the case 201. One terminal assembly 120 provided in the cap assembly 100a may be electrically connected to the first electrode of the electrode assembly 301, and another terminal assembly 120a may be electrically connected to the second electrode of the electrode assembly 301.

Because the cap assembly 100a may be the same or substantially the same as the cap assembly 100a described above with reference to FIGS. 16 and 17, redundant description thereof will not be repeated.

Although the present disclosure has been described above with respect to embodiments thereof, the present disclosure is not limited thereto. Various modifications and variations can be made thereto by those skilled in the art within the scope of the present disclosure and the equivalent scope of the appended claims.

## Claims

1. A cap assembly (100) comprising:
a cap plate (110) comprising at least one first engaging portion (113); and
at least one terminal assembly (120) comprising a second engaging portion (122) fitted and engaged with the first engaging portion (113).

2. The cap assembly (100) according to claim 1, wherein the at least one terminal assembly (120) comprises:
a groove plate (121) having a terminal hole, and comprising the second engaging portion (122); and
a direct-connection terminal (123) having one side connected to an electrode assembly (300), and another side protruding to an outside through the terminal hole.

3. The cap assembly (100) according to claim 2, wherein the second engaging portion (122) is located on at least one from among multiple side surfaces of the groove plate (121) that contacts the cap plate (110), and corresponds to the first engaging portion (113).

4. The cap assembly (100) according to claim 3, wherein the second engaging portion (122) comprises:
a first extension portion (122a) extending laterally along a perimeter of an upper surface of the groove plate (121); and
a second extension portion (122b) facing the first extension portion (122a), and extending along a perimeter of a lower surface of the groove plate (121),
wherein the first extension portion (122a) and the second extension portion (122b) have an interval therebetween in a thickness direction of the groove plate (121), the interval corresponding to a thickness of the first engaging portion (113).

5. The cap assembly (100) according to claim 4, wherein the second extension portion (122b) further comprises a bent portion (122c) bent toward the first extension portion (122a) at opposite ends in a lengthwise direction of the groove plate (121), and
wherein the first engaging portion (113) further comprises a groove portion (113a) corresponding to the bent portion (122c).

6. The cap assembly (100) according to any one of claims 2 to 5, wherein the direct-connection terminal (123) comprises:
an integral terminal (124) protruding to the outside through the terminal hole; and
a current-collecting plate (125) extending from opposites ends of one side of the integral terminal (124) facing the electrode assembly (300), and connected to an electrode tab of the electrode assembly (300).

7. The cap assembly (100) according to claim 6, further comprising an insulating member (130) interposed between the cap plate (110) and the current-collecting plate (125).

8. The cap assembly (100) according to any one of claims 2 to 7, wherein the terminal assembly (120) further comprises a gasket (126) inserted into the terminal hole, and insulating the direct-connection terminal (123) from the groove plate (121).

9. The cap assembly (100) according to any preceding claim, wherein the cap plate (110) comprises:
a base portion (111) having a recessed portion (112) to receive the terminal assembly (120) therein; and
the first engaging portion (113) extending along a perimeter of a side surface of the recessed portion (112).

10. The cap assembly (100) according to claim 9, wherein the recessed portion (112) is recessed in the base portion (111) in a first direction to facilitate the second engaging portion (122) to be fitted and engaged with the first engaging portion (113).

11. The cap assembly (100) according to claim 9 or 10, wherein the first engaging portion (113) has a step with respect to each of an upper surface and a lower surface of the base portion (111), and the thickness of the first engaging portion (113) is thinner than a thickness of the base portion (111).

12. A secondary battery (1) comprising:
an electrode assembly (300) comprising a first electrode, a second electrode, and a separator;
a case (200) having at least one opening, and accommodating the electrode assembly (300); and
a cap assembly (100) sealing the opening of the case (200),
wherein the cap assembly (100) is according to any preceding claim..
